# FASCICULE DE BREVET EUROPEEN

(11) **EP 1 907 197 B1**
(45) Date de publication et mention de la délivrance du brevet: **21.09.2011**
(21) Numéro de dépôt: 06764106.8
(22) Date de dépôt: 07.07.2006
(51) Int. Cl.: B29D 30/44, B65H 59/40

(54) **MÉTHODE DE RÉGULATION DE TENSION D'UN RENFORT DE PNEUMATIQUE**
VERFAHREN ZUR REGULIERUNG DER SPANNUNG EINER REIFENVERSTÄRKUNG
METHOD FOR REGULATING THE STRAIN OF A TYRE REINFORCEMENT

(30) Priorité: 08.07.2005 FR 0507414
(43) Date de publication de la demande: 09.04.2008
(73) Titulaire: Société de Technologie Michelin, 63000 Clermont-Ferrand (FR); Michelin Recherche et Technique S.A., 1763 Granges-Paccot (CH)
(72) Inventeur: COCOVI, Jose, F-63530 Volvic (FR); DELORME, Jean-Claude, F-63730 Mirefleurs (FR)
(74) Mandataire: Lasson, Cédric Y. M.
(86) Numéro de dépôt international: PCT/EP2006/064006
(87) Numéro de publication internationale: WO 2007/006748

(56) Documents cités:
- EP-A- 0 288 609
- EP-A- 0 344 928
- EP-A- 0 453 220
- FR-A- 2 606 003
- GB-A- 1 084 678
- US-A- 3 440 120
- US-A- 5 032 198
- PATENT ABSTRACTS OF JAPAN -& JP 01 047206 A (KANDENKO CO. LTD.), 21 février 1989 (1989-02-21)

## Description

La présente invention concerne la fabrication des pneumatiques. Plus précisément, elle se rapporte à la pose, au cours de la confection des pneumatiques, de renforts destinés à constituer un renforcement circonférentiel du pneumatique. La présente invention propose en particulier des moyens et une méthode pour piloter la tension sous laquelle un tel renforcement est enroulé au sein de l'ébauche du pneumatique.

Dans le domaine du pneumatique, lorsque l'on parle de renforcement, on évoque la présence, au sein du matériau élastomérique d'éléments de renforcement (que l'on nomme aussi simplement « renforts »). Ces renforts sont généralement longilignes et procurent au produit final une rigidité et une résistance sans commune mesure avec la rigidité et la résistance de la matrice de matériau élastomérique.

De tels renforts se présentent individuellement souvent sous la forme d'un fil de grande longueur. Ainsi, dans la suite de la présente demande, le terme « fil » doit être compris dans son sens tout à fait général, englobant un monofilament, un multifilament, un assemblage comme par exemple un câble ou un retors, ou un petit nombre de câbles ou retors groupés, et ceci quelle que soit la nature du matériau, par exemple textile ou métallique.

Les renforcements circonférentiels concernent surtout deux parties distinctes du pneumatique. On les utilise par exemple pour constituer les tringles des bourrelets du pneumatique (voir la demande de brevet EP 0 582 196) ou pour constituer un renforcement circonférentiel du sommet du pneumatique. On parle aussi de « renfort à 0° ». En réalité, l'orientation du renfort est proche de 0° mais rarement strictement égale à 0°. En effet, comme on enroule plusieurs tours selon un pas donné, il peut arriver que le renfort présente, par rapport au plan médian du pneumatique, un angle allant jusqu'à quelques degrés.

Le fil peut être enrobé de caoutchouc avant son enroulement (on parle alors de fil « gommé »). Le fil peut aussi être enroulé « nu », c'est à dire non gommé. La pose de fil nu s'effectue alors entre des couches de caoutchouc. Ces couches de caoutchouc sont soit issues d'autres constituants du pneu, soit prévues spécifiquement.

L'enroulement du renforcement circonférentiel peut avoir lieu dans le cadre d'une méthode de confection sur noyau souple ou rigide. L'enroulement du renforcement circonférentiel peut également avoir lieu dans le cadre d'une méthode comprenant une étape de confection d'une première ébauche sur un tambour cylindrique suivie d'une étape de pose des éléments du sommet une fois la première ébauche gonflée. Dans le cas d'un renforcement circonférentiel de sommet, on peut également l'enrouler au sein d'un bloc de sommet annulaire au centre duquel une carcasse est ensuite positionnée et gonflée pour lier les deux sous-ensembles avant la vulcanisation.

Quelle que soit la méthode de confection, quel que soit la partie du pneumatique recevant le renforcement circonférentiel et quel que soit le type de fil utilisé, il est souhaitable d'appliquer au fil une tension déterminée au cours de l'enroulement du fil. Au cours d'une opération d'enroulement donnée, cette tension peut être constante ou au contraire être variable. Dans la présente demande, on utilise le plus souvent les termes « piloter » ou « pilotage » pour désigner l'action ou le fait de réguler, c'est à dire de maintenir activement une valeur à un niveau donné, que ce niveau soit fixe ou variable.

Une difficulté concerne cependant le pilotage sûr et précis de cette tension d'enroulement. Dans ce domaine, le document EP 0 344 928 propose de moduler la tension à l'aide d'un galet relié à une machine électromécanique à courant continu. Le contrôle du courant consommé ou restitué par la machine électromécanique permet de faire varier la tension du fil. Le document EP1 022 119 propose une méthode et un dispositif dans lesquels la tension est créée et déduite indirectement à partir de la différence de vitesse de rotation entre le tambour sur lequel on enroule le fil et la poulie qui délivre le fil. En effet, à une différence de vitesse correspond un niveau d'allongement du fil et à un niveau d'allongement donné correspond une tension donnée. Le document US 2003/0106628 propose de placer la poulie motrice au plus près possible du tambour et de contrôler en continu la position de la poulie en fonction en particulier de la tension effective du fil. Les documents EP 0 453 220 et GB 1 084 678 proposent de contrôler l'enroulement en fonction de la mesure de la tension du fil, la tension étant mesurée à l'aide d'un dispositif à roulettes qui dévient le fil, la force exercée sur les roulettes étant une indication de la tension.

Un problème commun à ces différentes solutions est que l'inertie des éléments et/ou les petites variations instantanées de rayon des enroulements et/ou les perturbations engendrées par le système de régulation provoquent d'importantes variations de la tension réelle d'enroulement du fait de la raideur du renfort.

Un objectif de l'invention est donc en particulier de proposer une méthode et un dispositif dans lesquels les variations indésirables de la tension effective de l'enroulement sont réduites.

L'invention propose pour cela une méthode de fabrication d'un pneumatique selon les revendications 1 à 8 ainsi qu'un dispositif d'alimentation en fil selon les revendications 9 à 12.

La suite de la description permet de bien comprendre tous les aspects et avantages de l'invention, en s'appuyant sur les figures suivantes :

La figure 1 est une représentation schématique illustrant à la fois la méthode et un mode de réalisation du dispositif selon l'invention,

La figure 2 est une vue en perspective d'une première partie d'un mode de réalisation préféré du dispositif selon l'invention.

La figure 3 est essentiellement une vue de face d'une deuxième partie du mode de réalisation préféré du dispositif de la figure 2 dans laquelle la première partie est également visible.

La figure 4 est une vue en perspective d'une troisième partie du mode de réalisation préféré du dispositif de la figure 2.

La figure 5 est essentiellement une vue de face de l'ensemble du mode de réalisation préféré du dispositif de la figure 2.

Les figures 6 à 9 sont des graphes montrant des exemples d'évolutions de tension au sein d'un renforcement circonférentiel de sommet.

Sur les différentes figures, les éléments identiques ou similaires portent les mêmes numéros de références. Leur description n'est donc pas reprise systématiquement.

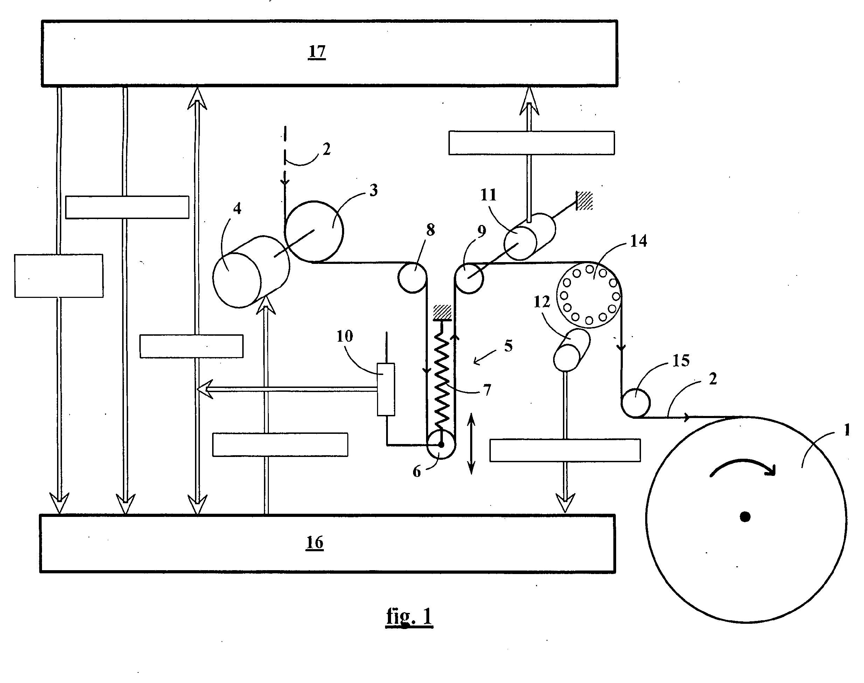

A la figure 1 on a représenté schématiquement un mode de réalisation préféré du dispositif d'alimentation en fil sous tension pilotée selon l'invention. Cette représentation permet également d'illustrer la méthode de fabrication selon l'invention.

Une forme 1 est entraînée en rotation afin de réaliser l'enroulement d'un certain nombre de tours du fil 2. Comme décrit plus haut, la forme 1 peut être par exemple une ébauche de pneumatique préparée sur un noyau souple ou rigide, une ébauche de pneumatique préparée sur une membrane gonflée ou une ébauche de bloc sommet préparée sur un support temporaire avant d'être ensuite assemblée à la carcasse du pneumatique.

Le fil 2 est tiré à travers l'ensemble du dispositif par la rotation de la forme 1. Au sein du dispositif, le cheminement du fil est le suivant. Le fil 2, en provenance par exemple d'une bobine de stockage (connue en soi et non représentée ici), passe autour d'une poulie motorisé 3 destinée à piloter la vitesse du fil. Le fil ne doit pas pouvoir glisser sur la poulie (il ne doit, en tous les cas, pas pouvoir glisser dans des proportions telles que le contrôle de sa vitesse ne soit plus possible). La poulie motorisée 3 est reliée à une machine électromécanique 4. La machine électromécanique peut agir comme moteur ou comme frein. Dans la suite de la description, conformément à la pratique courante, on désignera une telle machine électromécanique simplement par le mot « moteur ». Le moteur 4 est par exemple un moteur synchrone de type « brushless ». En aval de la poulie motorisée, le fil passe ensuite dans une boucle de compensation 5. De manière connue en soi, en créant un stock tampon, une boucle de compensation permet d'absorber des variations de longueur ou de vitesse du fil en limitant les perturbations occasionnées au procédé, en particulier en limitant les variations de tension. De préférence, les deux brins de la boucle de compensation sont parallèles sur une longue plage de compensation.

La boucle 5 comprend une poulie mobile 6 poussée par un ressort 7. Les poulies 8 et 9 sont portées par des axes sensiblement fixes. On comprend que pour une position verticale donnée de la poulie mobile 6, le ressort exerce une force donnée sur la poulie. Cette force correspond à la somme des tensions du brin descendant et du brin montant de la boucle, c'est à dire au double de la tension du fil. Ainsi, la valeur de la tension est liée à la position (ici verticale) de la poulie. Plus le ressort est comprimé, plus la tension est élevée. Les poulies 6, 8 et 9 sont montées folles, c'est à dire qu'elles tournent librement sous l'effet des mouvements du fil 2. On comprend qu'au cours de l'enroulement (dont la vitesse est donnée par la vitesse de rotation de la forme 1), selon la vitesse de rotation que l'on donne à la poulie motrice 3, on peut augmenter la longueur de la boucle 5 afin de réduire la tension ou au contraire réduire la longueur de la boucle 5 afin d'augmenter la tension du fil.

De préférence, la position de la poulie mobile est suivie par un capteur de position 10. Le signal émis par ce capteur est donc représentatif de la tension du fil dans la boucle de compensation 5. La poulie motorisée 3 est alors commandée en fonction du signal émis par le capteur de position 10. Alternativement, on peut par exemple utiliser un capteur direct de l'effort exercé par le ressort 7. En effet, le signal d'un tel capteur est bien représentatif des variations de longueur de la boucle de compensation.

Avantageusement, le dispositif comprend en outre, en aval de la boucle de compensation, un capteur de vitesse effective 12. Sur cet exemple, le capteur de vitesse fonctionne de la manière suivante : le fil entraîne sans glissement une poulie folle 14. La position de cette poulie est constatée en temps réel par le capteur 12 qui peut être par exemple un capteur optique ou magnétique. Le signal représentatif de la vitesse émis par le capteur 12 peut servir à affiner la commande du moteur 4. En effet, pour améliorer la précision et la réactivité de la régulation, on peut avoir intérêt à utiliser une vitesse de référence par rapport à laquelle on règle la vitesse de la poulie motorisée 3 en fonction de la longueur de la boucle de compensation. La mesure de vitesse de l'enroulement permet en outre d'anticiper les mouvements de la boucle de compensation et donc de réduire encore les variations de tension. Cette mesure de vitesse effective peut également permettre une redondance avec les informations concernant la vitesse du fil que l'on peut par exemple déduire de signaux issus du moteur 4, de la poulie motorisée 3 ou de la rotation de la forme 1.

Avantageusement, le dispositif comprend en outre, en aval de la boucle de compensation, un capteur de tension effective 11. Sur cet exemple, le capteur de tension effective fonctionne de la manière suivante : le fil passe sur une poulie folle 9, l'axe ou le support de l'axe de cette poulie est équipé de jauges de contrainte qui délivrent un signal représentatif de l'effort radial subi par la poulie et donc représentatif de la tension effective. Le signal émis par le capteur de tension peut servir à vérifier et/ou à enregistrer la valeur de tension et son évolution pour chaque pneumatique au cours du temps. Cette mesure est indépendante de la régulation décrite ci-dessus. Ce signal peut, le cas échéant, servir à déclencher une alerte si une dérive est constatée. Cette mesure peut également servir à étalonner le dispositif, c'est à dire à établir la relation entre le signal représentatif de la position de la poulie mobile 6 et la tension du fil effectivement délivrée par le dispositif. Cette mesure de tension effective peut également (lors du fonctionnement normal du dispositif) permettre une redondance avec les informations concernant la tension du fil que l'on déduit des signaux de position de la poulie mobile 6.

Sur cet exemple la poulie de tension 9 sert également de renvoi au sein de la boucle de compensation 5 mais une implantation indépendante est tout à fait possible.

De même, sur l'exemple représenté ici la poulie de vitesse 14 est indépendante de la poulie de renvoi et de tension 9. On pourrait au contraire combiner ces trois fonctions sur une poulie unique.

Le système de régulation et de contrôle est ici représenté sous la forme de deux éléments 16 et 17 distincts. Cette représentation permet de mieux faire ressortir les différentes fonction du système mais on comprend que l'ensemble peut en pratique être intégré dans un unique module ou au contraire dans plus de deux modules distincts.

Le variateur 16 a pour fonction de commander la rotation du moteur 4. Pour ce faire, il reçoit le signal de position du capteur de position de la poulie mobile et le compare à une consigne de position. De préférence, le variateur 16 reçoit en outre un signal de vitesse effective du capteur de vitesse 12 et l'intègre à la détermination de la commande qu'il transmet au moteur.

Le contrôleur 17 a pour fonction d'initier et de conduire le fonctionnement du dispositif d'alimentation en fil et en particulier de fournir au variateur 16 la consigne de position au fur et à mesure du déroulement du programme de pose du renforcement circonférentiel. Le contrôleur 17 peut en outre avoir pour fonction de recevoir, enregistrer et traiter le signal de tension effective émis par le capteur 11 et le cas échéant de comparer ce signal à celui du capteur de position 10 et/ou à la consigne de position, représentative de la tension souhaitée. Une fonction supplémentaire du contrôleur peut être de stocker les différentes recettes permettant de réaliser chaque type de pneumatique différent. Naturellement, le contrôleur peut également avoir toute autre fonction d'interface avec l'opérateur et/ou avec l'environnement industriel du dispositif, par exemple avec la machine au sein de laquelle le dispositif peut être intégré.

De préférence, la régulation de tension est réalisée par l'intermédiaire de la commande de la vitesse de la poulie motorisée. Cependant, la régulation de tension peut également être réalisée par l'intermédiaire de la commande du couple appliqué à la poulie motorisée.

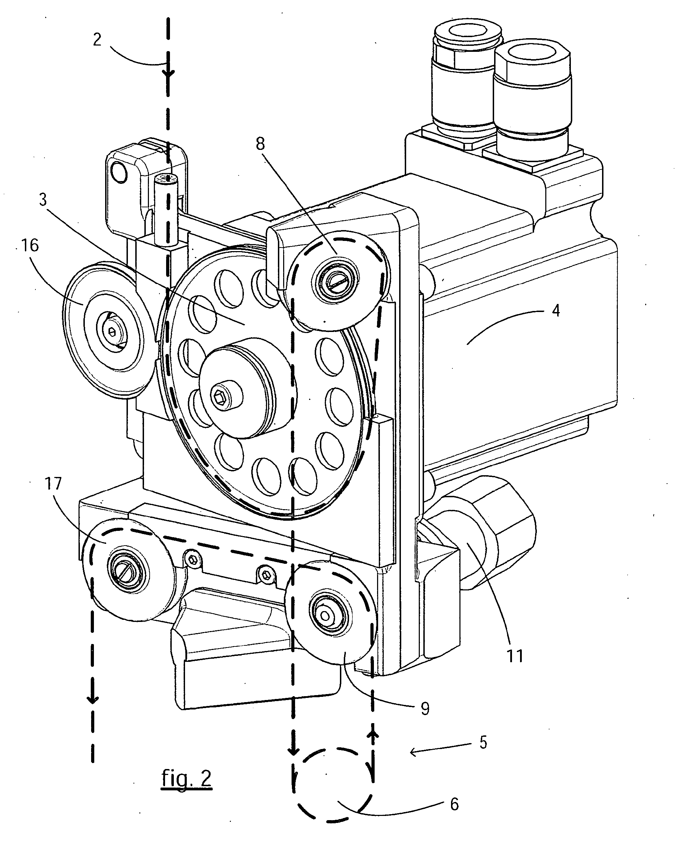

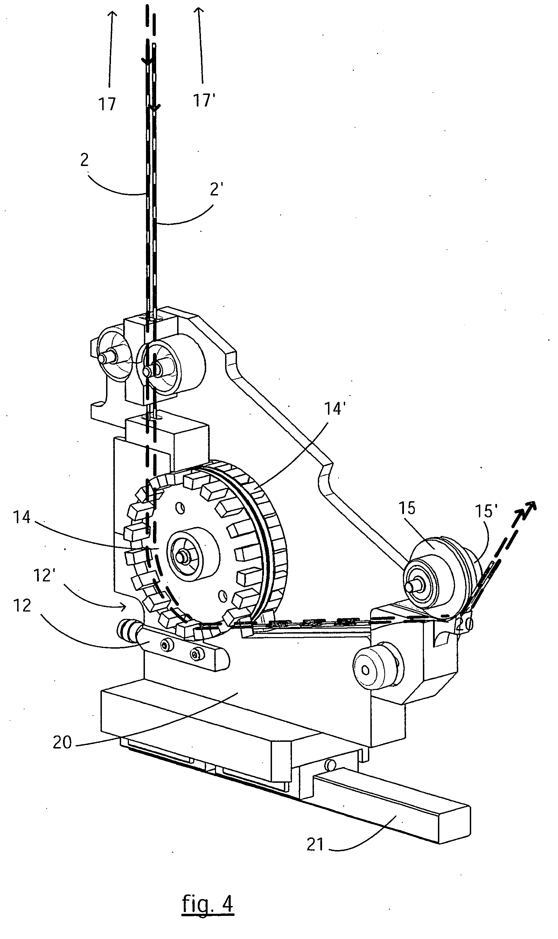

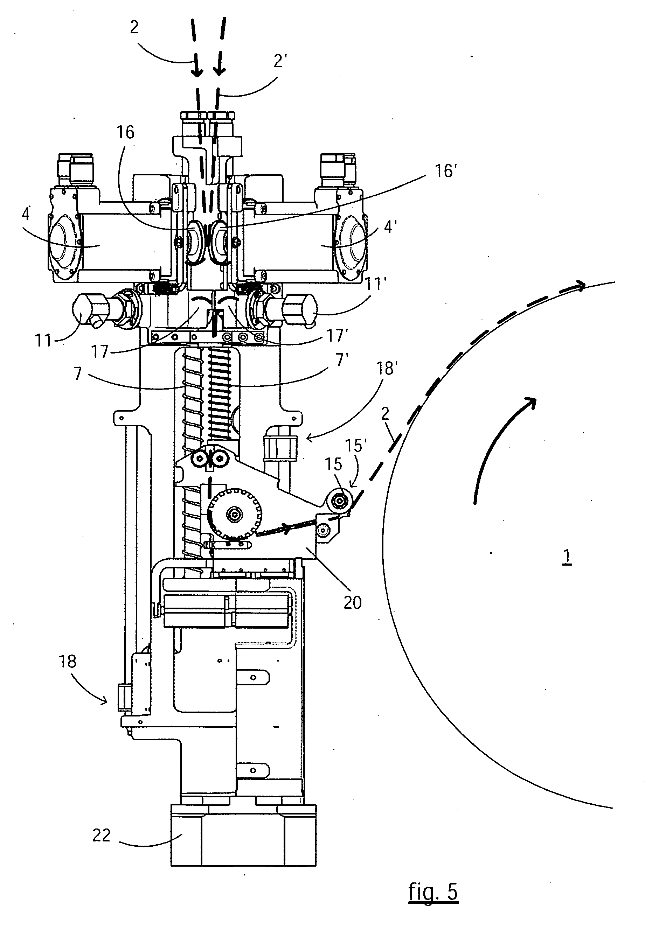

La figure 2 montre une première partie d'un mode de réalisation préféré du dispositif de l'invention. Cette partie concerne principalement les éléments situés de part et d'autre de la boucle de compensation. Sur cette figure, on retrouve la poulie motorisée 3, son moteur 4, les poulies de renvoi 8 et 9 et le capteur de tension effective 11. Suivons le cheminement du fil, représenté ici en trait pointillé. Le dispositif est alimenté verticalement en fil 2. Un galet presseur 16 permet de limiter les risques de glissement du fil sur la poulie motorisée 3. Le fil parcourt environ un demi tour de la poulie 3. Il est ensuite dévié par la poulie de renvoi 8 vers la boucle de compensation verticale 5 (la poulie mobile 6 est ici représentée schématiquement en pointillé). A la sortie de la boucle 5, le fil passe sur la poulie de renvoi 9 dont l'axe est porté par le capteur de tension effective 11. Une dernière poulie de renvoi 17 oriente le fil verticalement vers le bloc de pose visible sur les figures 4 et 5.

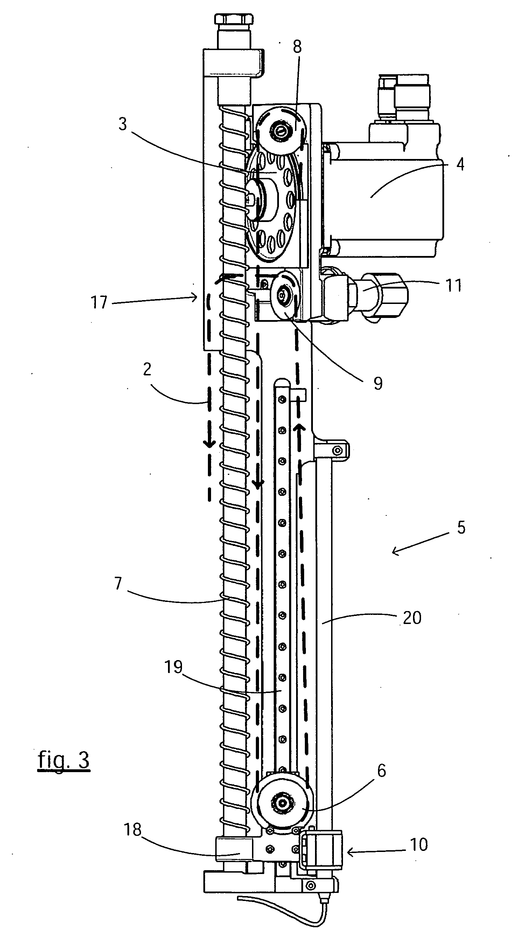

La figure 3 montre, outre le sous-ensemble décrit à la figure 2, en détail la constitution et l'implantation de la boucle de compensation de ce mode de réalisation préféré du dispositif de l'invention. Comme on peut le voir, la boucle 5 s'étend verticalement sous le sous-ensemble décrit à la figure 2. La poulie mobile 6 est portée par un chariot 18 guidé sur un rail 19. Le capteur de position 10 de la poulie mobile émet un signal représentatif de la position du chariot par rapport à une coulisse fixe 20. Le chariot 18 est soumis à la force de compression du ressort 7 qui tend à allonger la boucle 5. On comprend bien que la force exercée par le ressort varie en fonction de la position du chariot c'est à dire en fonction de la longueur de la boucle de compensation. Le ressort est de préférence relativement long et souple afin de permettre à la fois une large compensation, une très faible variation de tension sur de faibles amplitudes et donc une bonne précision du pilotage de la tension par la position e la poulie mobile. Une raideur de ressort de l'ordre de 0.5 N/mm permet d'obtenir des résultats satisfaisants.

Un principe de l'invention est ici clairement illustré, la boucle de compensation a un double rôle : d'une part le rôle de création, de maintien et de modulation de la tension, ce premier rôle étant assuré par la force variable du ressort et d'autre part le rôle de fourniture d'information à pour le pilotage de la tension, ce deuxième rôle étant assuré par la longueur de la boucle.

La figure 4 montre un mode de réalisation préféré des moyens de pose du fil situés en aval de la boucle de compensation. Dans ce mode préféré, deux fils 2 et 2' sont acheminés en parallèle. Chaque fil provient d'une boucle de compensation distincte. Les deux fils 2 et 2' proviennent donc de deux ensembles distincts tels que l'ensemble visible à la figure 3. Chaque fil entraîne une poulie de vitesse distincte 14 et 14' respectivement. Un capteur de vitesse 12, respectivement 12', émet un signal représentatif de la vitesse de chaque fil 2 et 2'. Les fils sont ensuite guidés par des galets de pose 15, respectivement 15', vers la forme autour de laquelle ils sont enroulés. Le bloc de pose 20 représenté sur cette figure 4 peut être mobile par rapport à un rail 21 afin de permettre par exemple des mouvements rapides d'approche et de recul vis-à-vis de la forme 1. Du fait de l'alimentation verticale et relativement haute du bloc de pose, ces mouvements horizontaux d'amplitude limitée n'ont pas d'effet notable sur la régulation de tension.

On comprend que toutes les fonctions de ce sous-ensemble sont doublées par rapport à l'exposé de la figure 1. La moitié de ce sous-ensemble suffit pour l'enroulement d'un seul fil selon l'invention.

La figure 5 montre un mode de réalisation préféré de l'invention dans lequel on associe deux dispositifs d'alimentations afin de permettre l'enroulement simultané de deux fils. Deux sous-ensembles tels que celui de la figure 2 alimentent deux boucles de compensation parallèles. Comme sur la figure 4, les numéros de références concernant l'alimentation du deuxième fil 2' sont identiques à ceux concernant l'alimentation du premier fil 2 mais on les a distingués par l'ajout du signe « ' ». Les éléments vus de face sur la figure 3 sont vus par l'arrière sur la figure 5. Afin d'illustrer l'indépendance de la régulation de tension de chacun des deux fils, on a représenté le ressort gauche 7 moins comprimé que le ressort droit 7'. Ainsi le chariot gauche 18 est ici dans sa position la plus basse alors que le chariot droit 18' est dans sa position la plus haute. Un bloc de pose 20 à deux fils tel que celui de la figure 4 reçoit les deux fils en provenance des poulies de renvoi 17 et 17' et les guide au cours de leur enroulement autour de la forme 1. De préférence, un sabot 22 solidaire des deux dispositifs associés permet une bonne préhension par un robot (non représenté).

La machine de confection de pneumatiques selon l'invention comprend un dispositif d'alimentation en fil tel que celui décrit ci-dessus et de préférence deux dispositifs sont associés en parallèle comme à la figure 5. Dans le cadre d'une confection automatisée, le positionnement du ou des dispositifs par rapport à la forme rotative peut être réalisé par un robot. Ce robot déplace alors solidairement les deux dispositifs d'alimentations par rapport à la forme afin de réaliser l'enroulement hélicoïdal voulu. Au cours de l'enroulement simultané à l'aide de deux dispositifs, la tension de chaque fil est régulée indépendamment. La tension de consigne peut alors être égale pour chacun des deux fils ou être différente. De préférence, les deux fils sont posés l'un à côté de l'autre, c'est à dire qu'ils demeurent adjacents à tout moment y compris dans le pneumatique fini. Si l'on désire faire varier le pas de l'enroulement, il peut être avantageux de permettre également la variation de l'écartement des deux galets de pose (voir références 15 et 15' sur la figure 4) afin de répartir les enroulements sur la forme.

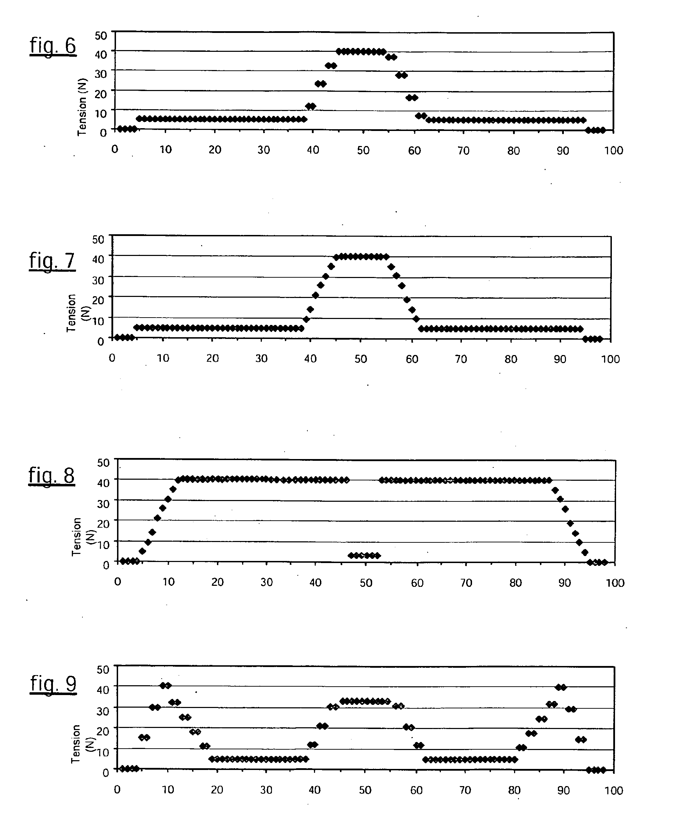

Les figures 6 et 7 montrent des exemples de profils de tension que l'on peut obtenir selon la méthode et à l'aide de la machine de l'invention. Les graphes montrent pour chaque tour de l'enroulement la valeur de la consigne de tension du fil. Les tours sont repérés par leur numéro d'ordre (en abscisse sur les graphes) et la consigne de tension est exprimée ici en Newton (N) (portée en ordonnée sur les graphes).

Il s'agit ici de la pose d'un renforcement circonférentiel de sommet par enroulement côte à côte de deux fils nus. L'enroulement (et donc le compte des tours) débute ici sur l'épaule gauche du pneumatique. Les graphes représentent donc l'évolution désirée de la tension sur la largeur du renforcement circonférentiel.

Le début de la pose (ici les deux premiers tours de chaque fil, donc quatre enroulements) s'effectue sous une tension quasi nulle afin d'éviter tout glissement du fil sur la forme, la tension est ensuite fixée à environ 5 Newton. Dans la partie centrale du renforcement circonférentiel de sommet les fils ont ici une tension d'environ 40 Newton. La transition entre ces deux niveaux de tension se fait de préférence progressivement.Sur l'exemple de la figure 6, on voit que les consignes de tensions augmentent progressivement en approchant de la partie centrale et diminuent de la même façon au-delà de la partie centrale. Sur l'exemple de la figure 6, les consignes demeurent cependant identiques deux à deux, c'est à dire qu'à chaque instant, chacun des deux fils que l'on enroule simultanément est soumis à la même tension. Sur l'exemple de la figure 7, on voit au contraire que les consignes de tensions de chacun des deux fils diffèrent dans les zones de transition. Ceci permet une évolution encore plus progressive de la tension au lieu d'une succession de paliers de deux fils. L'invention permet, comme on l'a vu plus haut, le pilotage individuel de la tension de chaque fil à chaque instant, le profil de tension des deux fils peut donc être différent ou identique.

D'autres exemples de profils de tension sont représentés aux figures 8 et 9. Celui de la figure 8 montre une augmentation rapide de la tension à l'épaule du pneumatique vers la tension maximale. Cette augmentation est répartie sur huit enroulements, c'est à dire sur quatre tours de deux fils. Dans la partie centrale de la bande de roulement, la tension est très réduite sur trois tours. On remarque que dans cet exemple la consigne de tension est parfois différente au sein d'une paire de fils adjacents afin de lisser le profil dans les zones de variation comme sur la figure 7. Le profil de tension de la figure 9 montre une augmentation rapide de la tension à l'épaule du pneumatique vers la tension maximale à laquelle un seul tour est effectué, puis une diminution également rapide vers une zone intermédiaire où la tension est minimale. Dans la zone centrale de la bande de roulement, la tension est à nouveau élevée. On remarque que dans cet exemple la consigne de tension est toujours identique au sein d'une paire de fils adjacents.

Les profils représentés ici sont sensiblement symétriques mais ceci n'est pas toujours souhaitable ou nécessaire. Par exemple, la tension peut être choisie en fonction de la répartition de masse de la sculpture de la bande de roulement destinée à couvrir le renforcement circonférentiel de sommet, cette répartition n'étant pas toujours symétrique. De même, les contraintes appliquées au pneumatique lors de son utilisation peuvent inciter le concepteur à choisir des tensions différentes entre la partie extérieure et la partie intérieure de la bande de roulement.

Lorsque la machine de confection utilise deux dispositifs d'alimentation en fil en parallèle, on comprend que les deux dispositifs peuvent partager certains éléments comme par exemple des supports de poulies, le variateur ou le contrôleur.

Avantageusement, la méthode selon l'invention utilise le principe de la confection sur noyau rigide. Lorsque le noyau est dit « rigide », c'est à dire que son volume ne varie pas (en tous cas pas au-delà de l'effet des variations thermiques) entre la confection et le moulage du pneumatique, on ne peut pas utiliser ce que l'on appelle le « supplément de conformation » pour mettre le renforcement circonférentiel sous tension au moment du moulage. On parle aussi de méthode de fabrication « non-conformante ». Grâce à l'invention, on peut dans ce cas appliquer une tension finale choisie et variable pour chaque zone du pneumatique sans que celle-ci soit tributaire de l'opération de moulage.

Grâce à l'invention, on peut dans le cadre de la fabrication de pneumatiques, poser des enroulements à tension contrôlée à des vitesses élevées, par exemple bien supérieures à 10 mètres par seconde et rapidement variables (plus de 6 m.s-2), avec une précision de la tension effective supérieure à 10%, ce qui n'est pas du tout envisageable avec les méthodes et les dispositifs de l'état de la technique.

Lorsque l'on parle de fil « nu », cela signifie qu'il n'est pas « gommé ». Le fil est gommé s'il est recouvert d'une gaine de gomme apte à apporter la quantité de gomme nécessaire au renforcement envisagé, c'est à dire qu'aucun apport supplémentaire de gomme n'est nécessaire. Le fil nu peut cependant être revêtu de tout traitement, destiné par exemple à le protéger de l'oxydation ou à favoriser la liaison ultérieure avec la matrice de matériau élastomérique. De ce fait, le fil peut garder son appellation de « fil nu » même si le traitement contient un matériau élastomérique.

L'invention peut s'appliquer à tous types de pneumatiques, par exemple pour véhicules de tourisme, véhicules poids lourd, moto, génie civil, etc...

## Revendications

1. Méthode de fabrication d'un pneumatique comprenant un renforcement circonférentiel, ladite méthode comprenant une étape d'enroulement d'un fil (2) autour d'une forme (1), la tension du fil étant pilotée au cours de l'enroulement par une poulie motorisée (3) délivrant le fil en amont d'une boucle de compensation (5) soumise à l'action d'un ressort (7), dans laquelle le pilotage de la tension est exercé en fonction des variations de longueur de la boucle de compensation et d'une mesure de la vitesse effective (12) du fil en aval de la boucle de compensation.

2. Méthode selon la revendication 1 dans laquelle les variations de longueur de la boucle de compensation sont déduites de la position d'une poulie mobile (6) soumise à l'action du ressort (7).

3. Méthode selon l'une des revendications précédentes dans laquelle on mesure en outre la tension effective (11) du fil en aval de la boucle de compensation.

4. Méthode selon l'une des revendications précédentes dans laquelle la forme (1) est un noyau rigide sur lequel le pneumatique est confectionné, la configuration extérieure du noyau correspondant sensiblement à celle de la cavité intérieure du pneumatique à l'état fini.

5. Méthode selon l'une des revendications précédentes dans laquelle le renforcement circonférentiel est un renforcement circonférentiel de sommet.

6. Méthode selon la revendication 5 dans laquelle la tension du fil varie selon un profil donné sur la largeur dudit sommet.

7. Méthode selon l'une des revendications précédentes dans laquelle on enroule simultanément deux fils (2, 2') sur une même forme (1).

8. Méthode selon la revendication 7 dans laquelle les deux fils sont adjacents au sein de l'enroulement.

9. Dispositif d'alimentation en fil pour enroulement d'un renforcement circonférentiel de pneumatique autour d'une forme, la tension du fil étant pilotée, ledit dispositif comprenant:
• une poulie motorisée (3),
• une boucle de compensation (5) soumise à l'action d'un ressort (7), ladite boucle étant placée en aval de la poulie motorisée (3),
• un capteur (10) sensible aux variations de longueur de la boucle de compensation,
• un capteur (12) sensible à la vitesse effective du fil, le capteur de vitesse effective étant placé en aval de la boucle de compensation (5),
• des moyens de commande (16) de la poulie motorisée aptes à commander la rotation de la poulie motorisée en fonction des variations de longueur de la boucle de compensation et de la vitesse effective du fil en aval de la boucle de compensation.

10. Dispositif d'alimentation en fil selon la revendication 9 comprenant en outre un capteur (11) sensible à la tension effective du fil, le capteur de tension effective étant placé en aval de la boucle de compensation (5).

11. Machine de confection de pneumatique comprenant deux dispositifs selon l'une des revendications 9 ou 10, lesdits dispositifs étant disposés au sein de la machine de manière à permettre l'enroulement simultané de deux fils (2, 2') autour d'une unique forme (1).

12. Machine de confection de pneumatique selon la revendication 11 comprenant en outre un robot apte à guider l'enroulement adjacent des deux fils.

## Claims

1. Fabrication method for a tyre comprising a circumferential reinforcement, the said method comprising a stage in which a thread (2) is wound around a form (1), the tension of the thread being managed during winding using a motorized pulley (3) which delivers the thread upstream of the compensation loop (5) subjected to the action of a spring (7), in which method the tension is managed as a function of the variations of the length of a compensation loop (5) and of a measurement of the effective speed (12) of the thread downstream of the compensation loop (5).

2. Method according to claim 1, in which the length variations of the compensation loop are deduced from the position of a mobile pulley (6) subjected to the action of the spring (7).

3. Method according to any of the preceding claims, in which the effective tension (11) of the thread is also measured downstream of the compensation loop.

4. Method according to any of the preceding claims, in which the form (1) is a rigid core on which the tyre is built, the external configuration of the core corresponding essentially to that of the internal cavity of the tyre in its finished state.

5. Method according to any of the preceding claims, in which the circumferential reinforcement is a circumferential crown reinforcement.

6. Method according to Claim 5, in which the thread tension varies in accordance with a given profile across the width of the said crown.

7. Method according to any of the preceding claims, in which two threads (2, 2') are wound simultaneously onto the same form (1).

8. Method according to Claim 7, in which the two threads are adjacent within the winding.

9. Thread feeding device for winding a circumferential tyre reinforcement around a form, the tension of the thread being managed, the said device comprising:
• a motorized pulley (3),
• a compensation loop (5) subjected to the action of a spring (7), the said loop being located downstream of the motorized pulley (3),
• a sensor (10) which is sensitive to variations in the length of the compensation loop,
• a sensor (12) sensitive to the effective speed of the thread, the effective-speed sensor being located downstream of the compensation loop (5),
• means (16) for controlling the motorized pulley capable of controlling the rotation of the motorized pulley as a function of variations of the length the compensation loop and variations of the effective speed of the thread downstream of the compensation loop.

10. Thread feeding device according to Claim 9, also comprising a sensor (11) sensitive to the effective tension of the thread, the effective-tension sensor being located downstream of the compensation loop (5).

11. Tyre building machine comprising two devices according to any of Claims 9 or 10, the said devices being arranged in the machine in such manner as to enable the simultaneous winding of two threads (2, 2') around a single form (1).

12. Tyre building machine according to Claim 11, also comprising a robot capable of guiding the adjacent winding of the two threads.

## Patentansprüche

1. Verfahren zur Herstellung eines eine Umfangsverstärkung enthaltenden Luftreifens, wobei das Verfahren einen Schritt des Wickelns eines Drahts (2) um eine Form (1) enthält, wobei die Spannung des Drahts während des Wickelns von einer angetriebenen Rolle (3) gesteuert wird, die den Draht vor einer Kompensationsschleife (5) liefert, welche der Wirkung einer Feder (7) ausgesetzt ist, wobei die Steuerung der Spannung abhängig von den Längenänderungen der Kompensationsschleife und einer Messung der effektiven Geschwindigkeit (12) des Drahts hinter der Kompensationsschleife ausgeführt wird.

2. Verfahren nach Anspruch 1, bei dem die Längenänderungen der Kompensationsschleife von der Stellung einer der Wirkung der Feder (7) ausgesetzten, beweglichen Rolle (6) abgeleitet werden.

3. Verfahren nach einem der vorhergehenden Ansprüche, bei dem außerdem die effektive Spannung (11) des Drahts hinter der Kompensationsschleife gemessen wird.

4. Verfahren nach einem der vorhergehenden Ansprüche, bei dem die Form (1) ein steifer Kern ist, auf dem der Luftreifen konfektioniert wird, wobei die äußere Konfiguration des Kerns im Wesentlichen derjenigen des Innenhohlraums des Luftreifens im Fertigzustand entspricht.

5. Verfahren nach einem der vorhergehenden Ansprüche, bei dem die Umfangsverstärkung eine Scheitelumfangsverstärkung ist.

6. Verfahren nach Anspruch 5, bei dem die Spannung des Drahts gemäß einem gegebenen Profil über die Breite des Scheitels variiert.

7. Verfahren nach einem der vorhergehenden Ansprüche, bei dem gleichzeitig zwei Drähte (2, 2') auf die gleiche Form (1) gewickelt werden.

8. Verfahren nach Anspruch 7, bei dem die zwei Drähte innerhalb der Wicklung aneinander angrenzen.

9. Drahtzufuhrvorrichtung zum Wickeln einer Luftreifen-Umfangsverstärkung um eine Form, wobei die Spannung des Drahts gesteuert wird, wobei die Vorrichtung enthält:
• eine angetriebene Rolle (3),
• eine Kompensationsschleife (5), die der Wirkung einer Feder (7) ausgesetzt ist, wobei die Schleife hinter der angetriebenen Rolle (3) angeordnet ist,
• einen Sensor (10), der auf die Längenveränderungen der Kompensationsschleife anspricht,
• einen Sensor (12), der auf die effektive Geschwindigkeit des Drahts anspricht, wobei der Sensor der effektiven Geschwindigkeit hinter der Kompensationsschleife (5) angeordnet ist,
• Steuereinrichtungen (16) der angetriebenen Rolle, die die Drehung der angetriebenen Rolle abhängig von den Längenänderungen der Kompensationsschleife und von der effektiven Geschwindigkeit des Drahts hinter der Kompensationsschleife steuern können.

10. Drahtzufuhrvorrichtung nach Anspruch 9, die außerdem einen Sensor (11) enthält, der auf die effektive Spannung des Drahts anspricht, wobei der Sensor der effektiven Spannung hinter der Kompensationsschleife (5) angeordnet ist.

11. Maschine zur Konfektionierung eines Luftreifens, die zwei Vorrichtungen nach einem der Ansprüche 9 oder 10 enthält, wobei die Vorrichtungen innerhalb der Maschine so angeordnet sind, dass sie das gleichzeitige Wickeln von zwei Drähten (2, 2') um eine einzige Form (1) erlauben.

12. Maschine zur Konfektionierung eines Luftreifens nach Anspruch 11, die außerdem einen Roboter enthält, der das aneinandergrenzende Wickeln der zwei Drähte führen kann.
